# EUROPEAN PATENT APPLICATION

(11) **EP 4 462 647 A1**
(43) Date of publication of application: **13.11.2024**
(21) Application number: 23172425.3
(22) Date of filing: 09.05.2023
(51) Int. Cl.: H02K 1/16, H02K 3/24, H02K 5/128, H02K 9/197, H02K 3/34, H02K 15/02, H02K 15/06, H02K 15/12

(54) **STATOR FOR AN ELECTRICAL MACHINE AND METHOD OF MANUFACTURING A STATOR**

(71) Applicant: Rolls-Royce Deutschland Ltd & Co KG, 15827 Blankenfelde-Mahlow (DE)
(72) Inventor: FURUHAUG, Roar, 7041 Trondheim (NO); LIAN-HAUG, Rune Morten, 7041 Trondheim (NO)

(57) **Abstract**

According to an embodiment of the invention, a stator (10) for an electrical machine and a corresponding manufacturing method is provided. The stator (10) includes a stator tube (20) defining a central axis (c) and including a first side (21) and a second side (22) axially displaced from each other. A plurality of stator teeth (30) along a circumference (24) of the stator tube (20), wherein each of the stator teeth (30) extends from the first side (21) to the second side (22) of the stator tube (20) to define stator slots (37) between each neighboring stator teeth (30). At least a bottom portion (32) of each of the plurality of stator teeth (30) is embedded in a stator tube wall (25) of the stator tube (20) to bond the stator teeth (30) with the stator tube (20). a winding coil arrangement (50) wound along the circumference (24) of the stator tube (20) and supported by the stator slots (37) formed between the stator teeth (30) of the stator tube (30). A stator back yoke (60) is coupled with the stator teeth (30) to surround the stator tube (20) and to enclose the winding coil arrangement (50).

## Description

### Field of the Disclosure

The present disclosure relates to a method of manufacturing a stator, a stator for an electrical machine and a corresponding electrical machine. In another aspect, the invention refers to an aircraft including the electrical machine.

### Technological Background

Electrical machines can generate a rotary motion of a rotor from a supplied electrical power or can generate electrical power using a supplied rotary motion depending on the mode of operation. The electrical machines include a stator and a rotor, wherein the rotor can rotate relative to the stator while the stator is immobilized.

When the electrical machine is operated as a motor, the stator receives an electrical power to generate a rotating magnetic field. In such case, the rotating magnetic field interacts with the rotor and causes the rotor to perform a rotating motion that is transferable to a mechanically coupled shaft to provide a rotation motion to a consumer based on the input electrical power. When the electrical machine is operated as a generator, a rotating motion of the rotor causes a voltage and/or a current which can be provided to an electric power consumer based on the input kinetic (rotation) energy.

The stator mechanically supports one or more coil windings which produce the rotating magnetic field or generate the electrical power depending on the mode of operation of the electrical machine.

The stator includes a stator tube which seals the flooded stator and prevents any stator coolant from entering into the air gap between stator and rotor as well as into the inner rotor compartment. Present solutions typically include a thin-walled stator tube through the air gap surrounding the rotor.

This stator tube is exposed to external coolant pressure and thus prone to buckling due to the thin stator tube wall thickness of the stator tube. The physical air gap between the stator tube and the rotating rotor must be maintained to limit air gap windage losses. Therefore, the stator tube wall thickness adds to the total magnetic air gap distance between stator and rotor and thus reduces power density and machine performance. Therefore, key performance features of the stator are maximized buckling strength at minimum wall thickness.

Furthermore, winding coil installation is difficult when the stator slots are open to the central axis of the stator tube and usually has to be done manually. This is the result of limited space available in the interior of a stator tube and the problem of limited space amplifies when using increasingly complex winding arrangements that need to be installed to provide higher power efficiency and a more reliable operation.

The present invention provides a method of manufacturing of a stator, a stator and an electrical machine including the stator which solves at least some of the above-mentioned problems. In addition, further technical problems in the above context are solved which become apparent from the following description.

### Summary of Invention

The invention is defined by the appended claims. The description that follows is subjected to this limitation. Any disclosure lying outside the scope of said claims is only intended for illustrative as well as comparative purposes.

According to one aspect of the present disclosure, a stator for an electrical machine is provided. The stator includes a stator tube defining a central axis and including a first side and a second side axially displaced from each other. The stator includes a plurality of stator teeth along a circumference of the stator tube, wherein each of the stator teeth extends from the first side to the second side of the stator tube to define stator slots between each neighboring stator teeth. At least a bottom portion of each of the plurality of stator teeth is embedded in a stator tube wall of the stator tube to bond the stator teeth with the stator tube. The stator includes a winding coil arrangement wound along the circumference of the stator tube and supported by the stator slots formed between the stator teeth of the stator tube. The stator back yoke is coupled with the stator teeth to surround the stator tube and to enclose the winding coil arrangement.

According to another aspect of the present disclosure, a method of manufacturing a stator for an electrical machine is provided. The method includes forming a stator tube and bonding a plurality of stator teeth with the stator tube by overmolding the plurality of stator teeth along a circumference of the stator tube so that at least a bottom portion of the plurality of stator teeth is embedded in a stator tube wall of the stator tube, wherein each of the stator teeth extends from the first side to the second side of the stator tube to define stator slots between each neighboring stator teeth. The method includes the step of installing, from the outside, a winding coil arrangement along the circumference of the stator tube and support the winding coil arrangement by the stator slots of the stator tube. The method includes the step of mechanically coupling a stator back yoke with the plurality of stator teeth to surround the stator tube and to enclose the winding coil arrangement.

Yet another aspect of the present disclosure refers to an electrical machine including the stator and an aircraft including the electrical machine.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
- Fig. 1: illustrates a perspective view and a partial cross section view of a stator according to an embodiment of the invention,
- Fig. 2: illustrates an enlarged cross section view of the embodiment of Fig. 1,
- Fig. 3: illustrates a perspective view and a partial cross section view of a stator according to an embodiment of the invention without the winding coil arrangement and without the stator back yoke for illustration,
- Fig. 4: illustrates an enlarged cross section view of the embodiment of Fig. 3,
- Fig. 5: illustrates schematically a method of manufacturing a stator according to an embodiment of the invention, and
- Fig. 6: illustrates a method of manufacturing a stator according to an embodiment of the invention.

### Detailed Description of the invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure. As used herein, the term "and/or" includes any and all combinations of one or more of the associated listed items. Expressions such as "at least one of," when preceding a list of elements, modify the entire list of elements and do not modify the individual elements of the list.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present.

Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to one aspect of the present disclosure, a stator for an electrical machine is provided. The stator includes a stator tube with a central axis and including a first side and a second side axially displaced from each other. The stator includes a plurality of stator teeth disposed along a circumference of the stator tube, wherein each of the stator teeth extends from the first side to the second side of the stator tube to define stator slots between each neighboring stator teeth. At least a bottom portion of each of the plurality of stator teeth is embedded or immersed in a stator tube wall of the stator tube or fully surrounded by the stator tube wall of the stator tube to bond or connect the stator teeth with the stator tube. The stator includes a wave winding coil arrangement wound along the circumference of the stator tube which is supported by the stator slots formed between the stator teeth of the stator tube. A stator back yoke is coupled with the stator teeth to surround the stator tube and to enclose the winding coil arrangement.

Embedded may mean in other words immersed in the stator tube wall. In other terms, a bottom portion of the stator teeth may be entirely surrounded by stator tube wall and the stator tube material of the stator tube wall. The bottom portion of the stator teeth is thus merged with the stator tube wall. The bonding and the embedding of the bottom portion of the stator teeth in the stator tube wall may be obtained by overmolding the stator teeth in the process of forming the stator tube. The bonding may be obtained by a molding process. A winding coil arrangement may include a plurality of wave winding coils. A wave winding coil includes a continuous, or uniform, conductor that is wound around the circumference of the stator tube. Each wave winding coil may correspond to a magnetic pole in operation. The wave winding coils refer to flexible conductors which can be bend and/or twisted at the first (front) side and/or the second (back) side of the stator tube to allow windings for forming a wave winding arrangement. At each side of the stator tube windings may be formed to provide different turns. Each of the wave winding coils include insulation so that different wave winding coils are electrically insulated from one another even if overlayed on top of each other. The wave winding coils may each include multiple conductors in a Litz wire arrangement to increase electric current transport. The number of stator slots may be 36 but any other number may be provided. The number of wave windings coils may be 18 but any other number may be provided. The first side may be a front side and the second side may be a back side. The stator tooth may include a magnetic material like laminated steel.

The above-described stator eliminates buckling due to the bonding of the stator teeth with the stator tube. This has an additional advantage of that the wall thickness of the stator tube wall can be made less thick thereby improving power density due to increased electromagnetic performance arising from the reduced stator tube wall thickness as the result of a reduced magnetic air gap. In detail, the thickness of the stator tube can be reduced to an absolute minimum as the thickness is determined only by the necessary strength to withstand external coolant pressure across the tooth tip width and not the whole circumference. Further, reliability can be improved since the stator tube buckling failure mechanism due to external coolant pressure is eliminated. In addition, since the back yoke is coupled after the winding coil arrangement is completed, the wave winding coil arrangement can be installed from the outside. This has the effect of an easier winding installation. Such a winding installation can for example be automized/robotized instead of be performed manually which is not possible or at least very difficult for a winding installation to be performed from the inside. Further, the invention eliminates the need for a sophisticated stator tube composite material. Instead, low-cost materials may be used due to the improved buckling strength.

According to an embodiment, each of the stator teeth includes a laterally extending foot portion at the bottom portion of the stator teeth axially extending from the first side to the second side, and the laterally extending foot portion is embedded in the stator tube wall. In other words, the laterally extending foot portion may be a laterally extending portion, e.g., formed like a reversed T in an axial view. The laterally extending foot may extend in circumferential direction. This laterally extending foot portion may stabilize the bonding of the stator teeth to the stator tube. The laterally extending foot portion may be positioned substantially in the center (middle) of the stator tube wall so that a coating of stator tube material above and below the laterally extending foot portion is formed. These coatings may have the same or approximately the same height.

According to an embodiment, side surfaces of each of the stator teeth include a coating which is of a same stator tube material as the stator tube. This implies that the stator teeth are fully coated by the stator tube material. This has the advantage that a winding coil insulation can be protected from being damaged or cut by sharp lamination edges during the winding installation. This is since the coating of the stator tube material can prevent a direct contact of winding coil insulation and (laminated) stator teeth. In particular, the stator tube material is relatively soft, e.g. a thermoplastic or more general polymer material, compared to the stator tooth material and thus prevents destruction of the winding coil insulation.

According to an embodiment, the coating on at least one of the side surfaces of the stator teeth includes at least one coolant channel extending in axial direction from the first side to the second side. The invention utilizes the fact that the stator teeth can have the same tangential thickness over the radial length, allowing for a wider stator slot width at the outer periphery. In the cases of using profiled Litz-, or profiled solid copper wire, this additional stator slot width can be used for coolant channels. Thus, the coating is used to provide integrated coolant channels. This allows cooling channels directly next to the winding coil wires in the active length next to the winding coil. This enables increased power density due to increased robustness against overheating.

According to an embodiment, the at least one coolant channel is formed in a corresponding coolant rib which axially extends from the first side to the second side. The coolant ribs may allow only local narrowing of the effective slot width. This may be favorable to minimize stator slot volume reduction caused by the coolant channels.

According to an embodiment, the at least one coolant rib and/or the at least one coolant channel is formed at a height in the stator slot corresponding to a height of a wave winding coil among a plurality of wave winding coils stacked on top of each other in the stator slot. Thus, a local cooling along the active length of respective wave winding coils is provided. An equality of the vertical position of the coolant ribs and/or coolant channel ensure close contact to a corresponding wave winding coil.

According to an embodiment, a width of the stator teeth is constant and a width of the coating on the at least one side surface of the stator tooth increases in a direction away from the central axis. In typical solutions to provide parallel winding slots sloped stator teeth are used that are wider at the outer periphery than the inner. Additional weight is saved by replacing this non-utilized lamination material with a light weigh stator tube material, e.g. typically reinforced polymer or other thermoplastics, and low-density coolant fluid. This weight reduction scales with the number of stator teeth. Thus, the entire stator weight is substantially reduced and additionally allows the integrated function of coolant channels.

According to another aspect of the present disclosure, a method of manufacturing a stator for an electrical machine. The stator may be the stator as disclosed above or in the following description. The method includes forming a stator tube and bonding a plurality of stator teeth with the stator tube in a process of overmolding the plurality of stator teeth along a circumference so that at least a bottom portion of the plurality of teeth is embedded in a stator tube wall of the stator tube, wherein each of the stator teeth extends from the first side to the second side of the stator tube to define stator slots between each neighboring stator teeth. The method includes the step of installing, from the outside, a winding coil arrangement along the circumference of the stator tube and support the winding coil arrangement by the stator slots of the stator tube. The method includes the step of mechanically coupling a stator back yoke with the plurality of stator teeth to surround the stator tube and to enclose the winding coil arrangement.

The achieved advantages correspond to the above stator for an electrical machine. The bonding and the embedding of the bottom portion of the stator teeth in the stator tube wall are obtained by an overmolding of the stator teeth in the process of forming the stator tube. Thus, the bonding is achieved by a common molding process. The stator eliminates buckling due to the bonding of the stator teeth with the stator tube. This has an additional advantage of that the wall thickness of the stator tube wall can be made less thick thereby improving power density due to increased electromagnetic performance due to the reduced stator tube wall thickness as the result of a reduced magnetic air gap. In detail, the thickness of the stator tube can be reduced to an absolute minimum as the thickness is determined only by the necessary strength to withstand external coolant pressure across the tooth tip width and not the whole circumference. In addition, since the back yoke is coupled after the winding coil arrangement is completed, the wave winding coil arrangement can be installed from the outside. This has the effect of an easier winding installation. Such a winding installation can for example be automized/robotized instead of be performed manually which is not possible or at least very difficult for a winding installation to be performed from the inside. Further, the invention eliminates the need for a sophisticated stator tube composite material. Instead, low-cost materials may be used due to the improved buckling strength.

According to an embodiment, the method may include the step of providing a stator tube mold tool including a plurality of stator tooth cavities formed at predefined positions along a circumference of the stator tube mold tool. The method includes assembling a plurality of stator teeth in the stator tooth cavities of the stator tube mold tool. The method includes inserting a stator tube block into a center of the stator tube mold tool. The method includes performing a step of injecting a stator tube material into the stator tube mold tool to produce the stator tube and to bond the plurality of stator teeth with the plurality of stator teeth. This method has the effect that the stator teeth are automatically and precisely fixed in the correct position on the stator tube due to the predefined stator teeth cavities in the mold tool. These predefined stator tooth cavities can be provided equidistant along the circumference. This leads to positional precision and reduced variance in production.

According to an embodiment, each of the stator teeth includes a laterally extending foot portion at the bottom portion of the stator teeth axially extending in the axial direction, wherein the step of overmolding is performed to embed the laterally extending foot portion in the stator tube wall. As mentioned above, the laterally extending foot may extend in circumferential direction. This laterally extending foot portion may stabilize the bonding of the stator teeth to the stator tube. The laterally extending foot portion may be positioned substantially in the center (middle) of the stator tube wall so that a coating of stator tube material above and below the laterally extending foot portion is formed. These coatings may have the same or approximately the same height.

According to an embodiment, the step of forming the stator tube includes forming of a coating on side surfaces of each of the stator teeth. This can be achieved by allowing same space in the stator tooth cavities for stator tube material to cover the stator teeth. It implies that the stator teeth are fully coated by the stator tube material. This has the advantage that a winding coil insulation can be protected from being damaged or cut by sharp lamination edges during the winding installation as mentioned above.

According to an embodiment, the step of forming the stator tube includes forming on at least one of the side surfaces of the stator teeth at least one coolant channel extending in axial direction from the first side to the second side. The coolant channels may be formed by preprocessing or pre-processing of the stator tooth cavities to allow the formation of the coolant channels and/or coolant ribs in the molding process. Further, additional forming tools in the molding process may be used. Thus, the coating is used to provide integrated coolant channels. This allows cooling channels directly next to the winding coil wires in the active length next to the winding coil and leads to increased power density due to increased robustness against overheating.

According to an embodiment, a width of the stator teeth is constant and the forming the stator tube includes forming a width of the coating on the at least one side surface of the stator tooth which increases in a direction away from the central axis. This feature may be obtained by properly preprocessing of the stator tooth cavities. Thus, a relatively constant width over the stator slot height may be achieved. The width increase of the coating may be gradual. Additional weight is saved by replacing a non-utilized lamination material of the stator tooth with a light weigh stator tube material, e.g. typically reinforced polymer or other thermoplastics, and low-density coolant fluid. This weight reduction scales with the number of stator teeth. Thus, the entire stator weight is substantially reduced and allows integrating above coolant channels.

According to an embodiment, the method includes a step of cooling the stator back yoke before the step of mechanically coupling the stator back yoke with the plurality of stator teeth. Thus, cooling the back yoke vs. the stator tube, stator teeth and the winding assembly, prior to assembling to achieve a greater clearance in the dovetail interface during assembling. Further guiding tools may be used. The prior cooling may result in that the stator back yoke may have higher tolerances or clearance when being slid on the stator teeth and therefore eases the mechanical coupling process. Further, when being in the locking position and during the process of thermal equilibration, the prior cooling may lead to an additional coupling force/tension of the stator yoke due to thermal expansion while in coupled state on the stator teeth to improve coupling strength.

According to an embodiment, the stator back yoke may include a plurality of coupling members along a circumference and extending in axial direction, and each of the stator teeth include a plurality of coupling members extending in axial direction, wherein each coupling member mechanically interlock with coupling members of the stator teeth. The coupling members may include a laterally extending or widening portion. In particular, the coupling members may include a trapezoidal shape when viewed in axial direction. The coupling member of the stator teeth may include a corresponding shape to receive or to fit the coupling member of the stator yoke therein. The coupling may be in other words a dovetail coupling or a sliding dovetail joint. In this way as described above, a stable fixation of the stator back yoke may be provided by the plurality of stator teeth. Thus, an interlocking of the stator back yoke to the stator teeth is achieved. Due to the fitting of the mating coupling members, a friction coupling is provided along the axial length after the sliding is completed to safely secure the stator back yoke on the plurality of stator teeth. In embodiments, additional glue may be used, but in other embodiments no additional glue may be used. Thus, an effective and stable coupling of the stator back yoke is achieved.

According to an embodiment, an electrical machine including a stator according to embodiments of the present invention is provided. The electrical machine according to the embodiments of the stator may have higher power density due to thinner stator tube wall since the risk of buckling is eliminated due to the bonding of the stator teeth with the stator tube. Further advantages can be derived directly from the advantages of the stator.

In addition, an aircraft comprising the electric machine is provided. In particular for aircrafts the above advantages are important for improving weight as well as safety and reliability of operation.

### Specific Embodiments

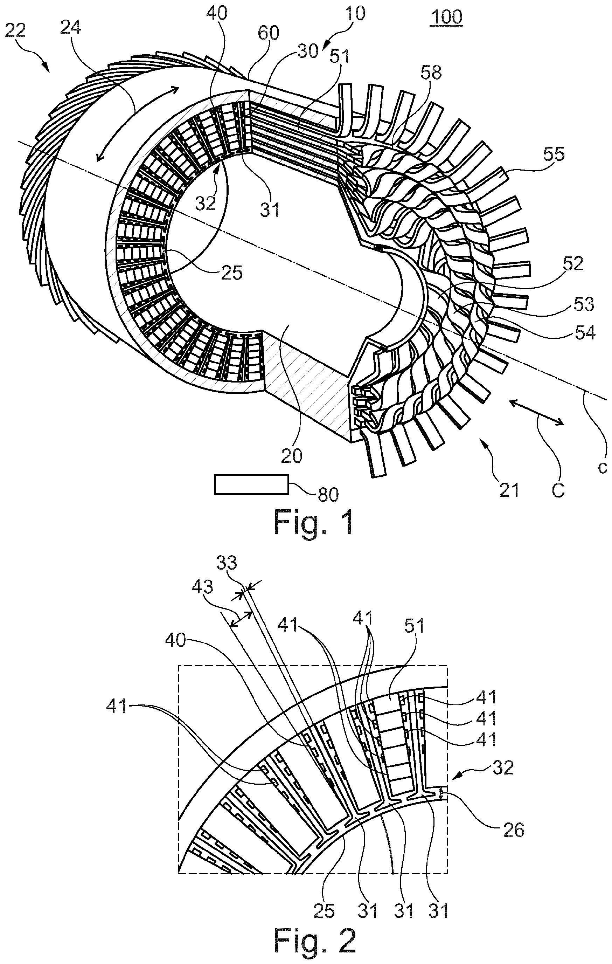

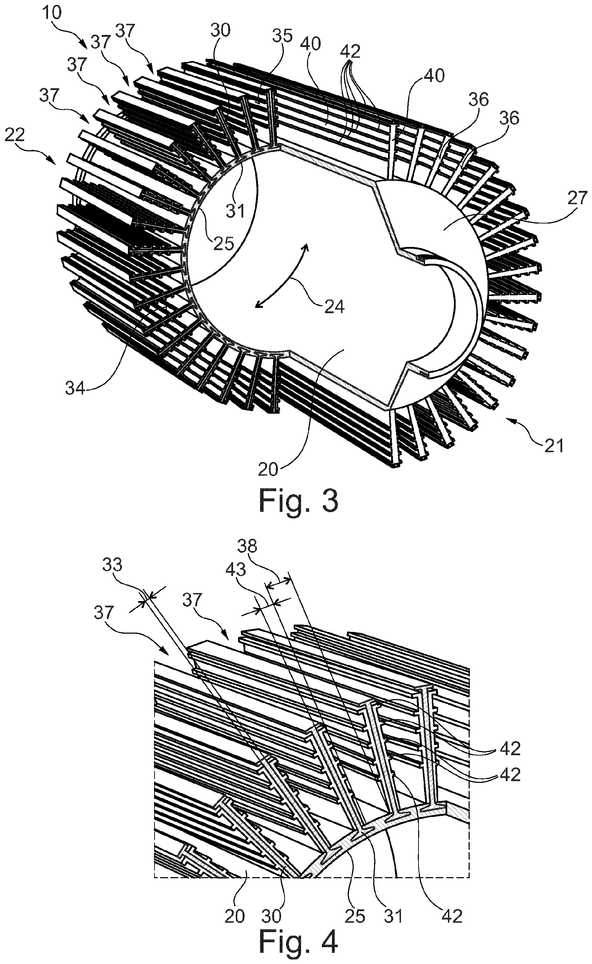

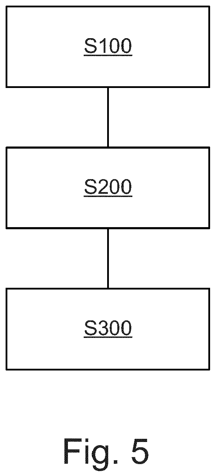

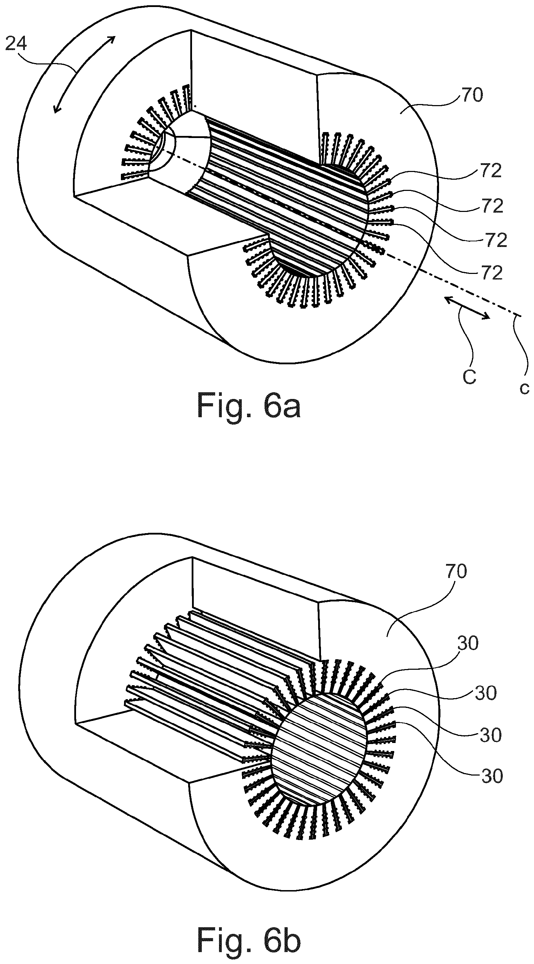

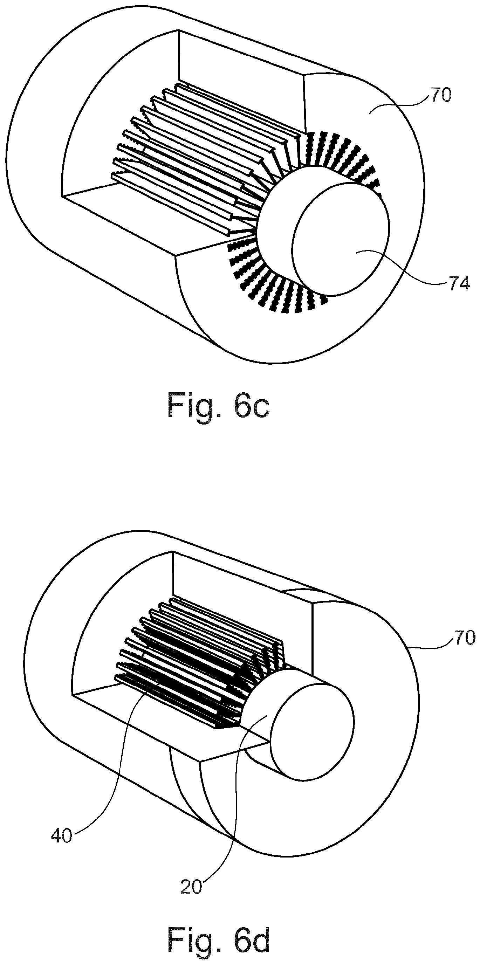

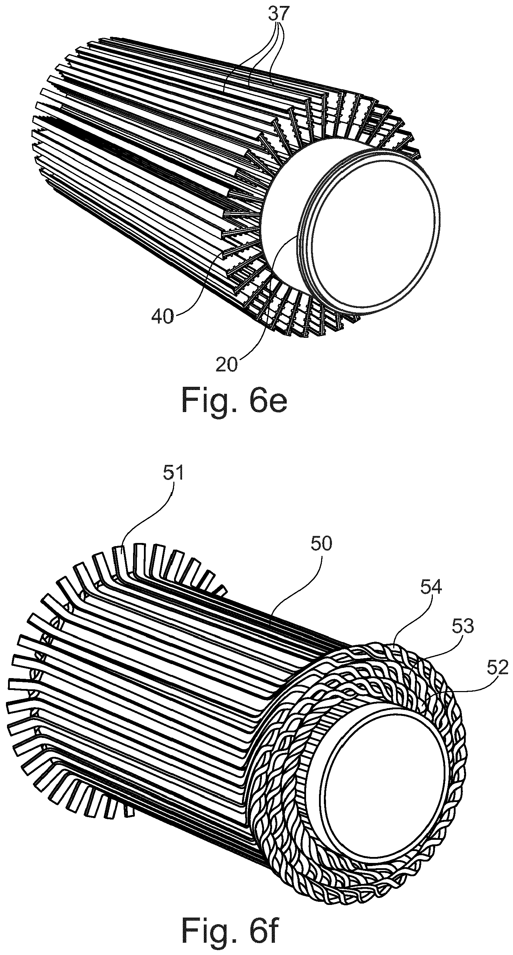

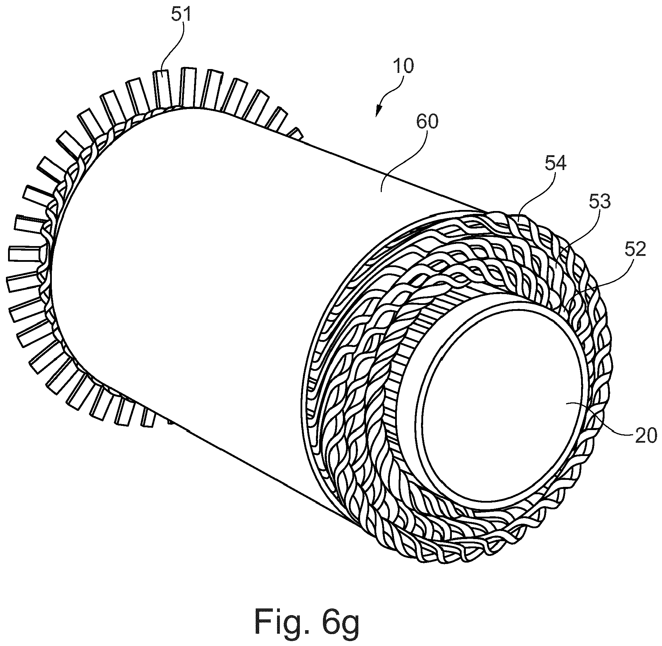

According to Figs. 1 and 2 a perspective and a partial cross section view of a stator 10 for an electrical machine 100 according to an embodiment of the invention is described. Fig. 2 illustrates an enlarged cross section view of the embodiment of Fig. 1. Fig. 3 illustrates a perspective and a partial cross section view of a stator 10 according to an embodiment of the invention without the winding coil arrangement 50 and without the stator back yoke 60 for illustration. Fig. 4 illustrates an enlarged cross section view of the embodiment of Fig. 3. Figs. 5 and 6 refer to a method of manufacturing the stator 10 as described in the following.

Referring to Figs. 1 to 4, a stator 10 for an electrical machine 100 is provided. The stator 10 includes a stator tube 20 which defines a central axis c. The stator tube 20 includes a first side 21 and a second side 22 axially displaced from each other. The stator tube 20 further includes a stator tube wall 25 along the circumference 24 having a stator tube wall thickness 26 as more clearly illustrated in Fig. 2. The stator tube wall thickness 26 may be constant along the circumference 24 of the stator tube 20.

The stator 10 includes a plurality of stator teeth 30. The plurality of stator teeth 30 is disposed along the circumference 24 of the stator tube 20. Each of the stator teeth 30 extend from the first side 21 to the second side 22 of the stator tube 20 to define stator slots 37, see Figs. 3 and 4, between the stator teeth 30. In the present case, the number of stator teeth 30 and the number of stator slots 37 is equal to 36. However, the invention is not restricted thereto and also a different number of stator slots/teeth can be provided.

Referring to Figs. 1 to 4 and in particular the enlarged Figs. 2 and 4, at least a bottom portion 32 of each of the plurality of stator teeth 30 is embedded in the stator tube wall 25 of the stator tube 20 to bond the stator teeth 30 with the stator tube 20. Thus, the bottom portion 32 is entirely integrated in the stator tube wall 25 and thereby bonded with the stator tube 20. For example, the bottom portion 32 is entirely surrounded by stator tube material. This configuration can be obtained by overmolding the stator teeth 30 in the process of forming the stator tube 20 as will be illustrated in Fig. 6 and the description thereto. Since the stator teeth 30 are bond to the stator tube 20 the buckling failure problem is eliminated. Therefore, the stator tube wall thickness 26 can be reduced to a minimum which results in an increase of power density and electromagnetic performance.

Referring to Figs. 2 and 4, each of the stator teeth 30 may include a laterally extending foot portion 31 at the bottom portion 32 of the stator teeth 30. That means the laterally extending foot portion 31 may circumferentially extend. Further, the laterally extending foot portion 31 axially extends from the first side 21 to the second side 22 along a length of the stator tooth 30. Also here, the laterally extending foot portion 31 is embedded in the stator tube wall 25, as indicated in Fig. 2. Thus, the entire foot portion 31 of the stator teeth 30 is integrated/immersed in the stator tube wall 25 to be bond to the stator tube 20. This configuration including the foot portion 31 increases the coupling strength of the stator teeth 30 with the stator tube 20.

Each of the stator teeth 30 include side surfaces 34, 35. Referring to Figs. 2 and 4, these side surfaces 34, 35 may include a coating 40. The coating 40 is of a same stator tube material as the stator tube 20 and thus produced in the same process. Thus, the coating 40 can be formed in the overmolding process together with the forming of the stator tube 20 itself as will be explained in more detail below. In particular, the coating 40 may be integrally formed with the stator tube 20 and the stator tube wall 25 thereof. Since the stator teeth 30 are usually laminated, they include sharp edges. The coating 40 on the side surfaces 34, 35 may prevent that an insulation of the wave winding coils 51 is damaged by the sharp edges of the stator teeth 30. Further, as shown in Fig. 3, a front surface 36 and the back surface (here not shown) may also include the coating 40.

Each of the stator teeth 30 may have a constant stator tooth width 33, i.e., the tangential thickness over the radial length. This can be seen well in Fig. 2 or Fig. 4. Thus, each stator slot 37 may be wider at an outer periphery compared to an inner periphery. This is in particular illustrated in Figs. 2 and 4 and used as explained in the following.

Preferably, as mentioned above and indicated by referring to Figs. 2 and 4, a stator tooth width 33 of the stator teeth 30 is constant along the height direction. Further, a coating width 43 of the coating 40 on the at least one side surfaces 34, 35 of the stator tooth 30 may increase in the height direction, i.e. in direction away from the central axis c. As a result, the effective stator slot width 38 is relatively constant in height direction (direction away from the central axis c) or at least only slightly widening as indicated in Fig. 4. This may be useful for the stacking of copper wire or profiled Litz wire or profiled solid copper wire. However, since this is achieved by the coating 40 additional weight is reduced by replacing the non-utilized lamination material with a light weigh stator tube material, e.g. typically reinforced polymer, and a low-density coolant fluid. This weight reduction scales with the number of stator teeth 30. Thus, the entire weight of the stator 10 is substantially reduced.

As can be seen in Figs. 2 and 4, the coating 40 on the side surfaces 34, 35 of the stator teeth 30 include coolant channels 41. The coolant channels 41 extend axially from the first side 21 to the second side 22 of the stator tube 20. Thus, the coating 40 on the side surfaces 34, 35 is used to integrate coolant channels 41 along the stator teeth 30 to cool the wave winding coils 51 in operation. As can be seen in Fig. 2, the coolant channels 41 may be formed symmetrically on both sides of each stator tooth 30 so that each stator tooth 30 contributes to the cooling of both stator slots 37 adjacent to the stator tooth 30. Therefore, liquid coolant or other coolant can flow through the active length next to the heat generating winding coil wires in the stator slots 37.

Further, when referring to Fig. 4, the at least one coolant channel 41 can be formed in a corresponding coolant rib 42 which axially extends from the first side 21 to the second side 22 of the stator tube 20. The coolant ribs 42 may allow only local widening of the stator slot width so to minimize the reduction on the stator slot volume caused by the coolant channels 41. For example, as shown in Figs. 3 and 4, a plurality of coolant ribs 42 (here exemplarily 5 visible coolant ribs) are provided on each side surface 34, 35 of the stator teeth 30. For example, two neighboring coolant ribs 42 may constitute a coolant channel 41. Due to more space in the periphery, the diameter of the coolant channel/coolant rib 41/42 may increase with the distance from the central axis c. Thus, more coolant may be carried in the coolant channels 41 farther away from the central axis c. This may be the result of optimizing the available space in the stator slots 37 and to provide sufficient stator slot width 38 for the wave winding coils 51 supported therein.

Referring to Fig. 4, the at least one coolant rib 42 and/or the at least one coolant channel 41 is formed at a height in the stator slot 37 corresponding to a height of a wave winding coil 51 or a conductive portion thereof among a plurality of wave winding coils 51 stacked on top of each other in the stator slot 37. This is for example shown in Fig. 4, where in this example 6 turns of wave winding coils 51 are stacked on top each other. The coolant ribs 41 may be provided on the same height as the turns wave winding coils 51 as indicated in Fig. 2. Thus, each of the turns of the wave winding coils 51 may be subject to local cooling by one corresponding coolant channel/coolant rib 41/42.

Referring to Fig. 1, a winding coil arrangement 50 is wound along the circumference 24 of the stator tube 20. The winding coil arrangement 50 is supported by the stator slots 37 formed between the stator teeth 30.

The winding coil arrangement 50 may include a plurality of wave winding coils 51. For example, in the present case, 18 wave winding coils 51 are provided. First ends 55 of the wave winding coils 51 may provide connectors to connect the winding coil arrangement 50 with power electronics 80 to operate the stator 10 as part of an electrical machine 100. Second ends of the wave winding coils 51 may be connected to a neutral point/phase to provide a star connection (here not shown). On the front side 21 (and on the second side 22, here not shown), the winding coil arrangement 50 includes three winding layers 52, 53, 54 to provide the winding coil arrangement 50, but the invention is not restricted thereto and any other winding arrangement may be provided.

The winding layers 52, 53, 54 at the first side 21 are partially supported by a conical tip portion 27 of the stator tube 20 extending in axial direction C. This is also illustrated in Fig. 3 or Fig. 6 (e) for example. Due to the support by the conical tip portion 27 an improved installation process is enabled and (central) axial space, e.g. for a rotor, secured.

A plurality of connectors 55 lead out from an outer diameter 58, indicated in Fig. 1, of the wave winding coil arrangement 50. Thus, since the wave winding arrangement 50 is provided from the outside before the stator back yoke 60 is coupled thereto as explained further below, the connectors 55 can be provided from an outer diameter 58 instead of from an inner diameter in case of when the wave winding coil arrangement is installed from the inside. Thus, due to the winding installation from the outside, a more space efficient lead out arrangement can be provided with reduced axial space requirements.

The stator 10 in this particular case comprises 18 wave winding coils 51 that can be grouped to 6 electric 3-phase lanes, of which groups of three may be operated synchronously, and where the two groups are operated none-synchronously, shifted 30 electrical degrees, to achieve a geometrically 6-phase electric machine. However, the present invention does not depend on a particular 6-phase electrical machine and the above is only an example of a winding coil arrangement 50. For example, also a 3-phase electrical machine may be provided or any other electrical machines.

Referring to Fig. 1, a stator back yoke 60 is mechanically coupled with the stator teeth 30 to surround the stator tube 20 along the circumference. Thus, the stator back yoke 60 encloses the winding coil arrangement 50.

The stator back yoke 60 may include a plurality of coupling members along a circumference of the stator back yoke 60. As well, each of the stator teeth 30 may include coupling members at a top portion of each stator tooth 30 which mechanically interlock with the coupling members of the stator back yoke 60. In particular, a dovetail interlock or dovetail coupling may be provided. Such dovetail interlock may be obtained by axially sliding the stator back yoke 60 onto the stator teeth 30 while the coupling members fit into each other. Due to the interlocking of coupling members form the first side 21 to the second side 22, a friction coupling is provided to secure the stator back yoke 60 on the plurality of stator teeth 30. Thus, an effective and stable coupling of the stator back yoke 60 is achieved.

Further, the stator 10 as described above in various embodiments may be part of an electrical machine 100 which includes the stator 10 according to any of the above embodiments. In addition, power electronics 80 may be connected to connectors 55 of the stator 10. A rotor, here not shown, is coaxially surrounded by the stator 10 and can be rotated around the central axis c in operation. An air gap, here not visible, is formed between the rotor and the stator 10 in the electrical machine 100.

According to Figs. 5 and 6, a method of manufacturing of a stator 10 for an electrical machine 100 is disclosed.

The method includes the step of forming S100 a stator tube 20 by molding. In the process of forming the stator tube 20 bonding of the plurality of stator teeth 30 with the stator tube 20 is achieved by overmolding the plurality of stator teeth 30 along a circumference 24. Thus, not only the stator tube 20 is formed in the molding process since, in the same instance, also the bonding of the stator teeth 30 to the stator tube 20 is provided by overmolding the stator teeth 30. In this way, a bonding of each of the stator teeth 30 to the stator tube 20 is achieved which eliminates the failure problem of buckling.

In particular, a bottom portion 32 of the plurality of stator teeth 30 is embedded in a stator tube wall 25 of the stator tube 20 as the result of the overmolding of the stator teeth 30. Once bonded to the stator tube 20, each of the stator teeth 30 extend from the first side 21 to the second side 22 of the stator tube 20 to define stator slots 37 between each neighboring stator teeth 30.

The above process can be preferably implemented as in the following. Referring to Fig. 6 (a), a stator tube mold tool 70 may be provided. The stator tube mold tool 70 includes a plurality of preformed stator tooth cavities 72 formed at predefined positions along a circumference of the stator tube mold tool 70. Theses stator tooth cavities 72 are preprocessed to correspond to the stator teeth 30. In addition, the stator tooth cavities 72 may reserve space or particular profile for allowing stator tube material to cover the surfaces of the stator teeth 30 according to various embodiments as explained below.

Referring to Fig. 6 (b), the method may include the step of assembling a plurality of stator teeth 30 in the respective stator tooth cavities 72 of the stator tube mold tool 70 along the circumference 24. As shown in Fig. 6 (b), the process step is finished once the stator tooth cavities 72 are filled with corresponding the stator teeth 30. Then, the assembly process is finalized.

Referring to Fig. 6 (c), the method may include the step of inserting a stator tube block 74 into a center of the stator tube mold tool 70. The stator tube block 74 may be a cylinder-shaped block. The stator tube block 74 may define an inner diameter of the stator tube 20 as it excludes stator tube material to enter the inner diameter during the molding process as explained below.

In a further method step, once the stator tube block 74 is inserted, the stator tube mold tool 70 may be closed or sealed.

Referring to Fig. 6 (d), the method may include the step of injecting a stator tube material into the stator tube mold tool 70. In this manner, the stator tube 20 is formed and, at the same time, the plurality of stator teeth 30 are bond to the stator tube 20 (that is formed at the same time) due to the overmolding. The stator tube material may be a thermoplastic, preferably a polymer or a reinforced polymer. Thus, in a single forming or molding process, the stator tube 20 is formed with bonded stator teeth 30 disposed along the circumference 24 of the stator tube 20. Due to the predefined stator tooth cavities 72 predefined in the stator tube mold tool 70 a precise and correct positioning of the stator teeth 30 on the stator tube 20 may be achieved.

Referring to Fig. 6 (e), the stator tube 20 is provided accordance with Fig. 4 as the result of the forming process. Each of the stator teeth 30, once bonded with the stator tube 20, extend from the first side 21 to the second side 22 to provide stator slots 37 between each neighboring stator teeth 30.

The stator slots 37 are outwardly open. Due to the circular arrangement, the number of stator slots 37 equals the number of stator teeth 30, i.e., in the present example, there is 36 stator slots 37 provided in total. However, the present invention is not restricted thereto and a different number of stator slots/teeth 30, 37 may be provided.

The step of forming S100 the stator tube 20 may include forming a coating 40 on side surfaces 34, 35 of each of the stator teeth 30. This is shown in Fig. 6 (e) and can be provided in the molding process to allow stator tube material to cover the side surfaces 34, 35 of the assembled stator teeth 30. Thus, sharp edges of the laminated stator teeth 30 are covered by stator tube material preventing damage to insulation of wave winding coils during installation.

Further, as mentioned above, a stator tooth width 33 of the stator teeth 30 may be constant. In other words, the stator tooth 30 can have the same tangential thickness over the radial length. For supporting for example profiled Litz- or profiled solid copper wire, an effectively substantially constant stator slot width 38 may be provided as described in the following.

For such configuration, the method may include in the step of forming S100 the stator tube 20 a coating width 43 of the coating 40 on the at least one side surface 34, 35 of the stator teeth 30 which increases in a direction away from the central axis c. This can be achieved by preprocessing the stator tooth cavities 72. However, since this is achieved by the coating 40, i.e. by stator tube material, substantial weight is reduced compared to when widening the stator teeth in peripheral direction. Thus, weight reduction is achieved.

Further, the method of forming S100 the stator tube 20 may include the step of forming on at least one of the side surfaces 34, 35 of the stator teeth 30 at least one coolant channel 41 axially extending from the first side 21 to the second side 22 of the stator tube 20. Thus, the additional coating 40 is beneficially used to integrate coolant channels 41. These coolant channels 41 can be generated in the molding process. For example, this can be done by providing profiles.

The coolant channels 41 can be provided in coolant ribs 42 that extend from the first side 21 to the second side 22 of the stator tube 20 as explained above. As well the coolant ribs 42 can be generated after the molding process or also by using forming tools in the molding process. The cooling channels 41 allow cooling liquid to flow directly through the active length next to the heat generating winding coils 51.

Preferably, the forming S100 may include that the coolant rib 42 and/or the at least one coolant channel 41 is formed at a height in the stator slot 37 corresponding to a height of a wave winding coil 51 among a plurality of wave winding coils 51 stacked on top of each other in the stator slot 37. In this way, each of the heat producing winding coils 51 is locally cooled by a corresponding coolant channel 41 or coolant rib 42.

Referring now to Fig. 6 (f), the method includes the step of installing S200, from the outside, a winding coil arrangement 50 along the circumference 24 of the stator tube 20. Since the stator slots 37 are open to the outside, the winding installation is simplified and can be performed in an automated/robotic manner. However, it is pointed out that the present invention does not depend on a particular winding coil arrangement 50.

The winding coil arrangement 50 is supported by the stator slots 37 formed between the mechanically coupled stator teeth 30 on the outer surface 23 of the stator tube 20. In Fig. 6 (f) a final state of the winding coil arrangement 50 is illustrated. In this state, three winding layers 52, 53, 54 are formed at the first side 21 and on the second side 22 (not visible).

The method now further, as illustrated in Fig. 6 includes mechanically coupling S300 a stator back yoke 60 with the plurality of stator teeth 30 to surround the stator tube 20 and to enclose the winding coil arrangement 50. The stator back yoke 60 is slid onto the stator teeth 30 from the first side 21 or the second side 22.

The mechanical coupling S300 of the stator back yoke 60 includes a sliding of the stator back yoke 60 in axial direction C while coupling members (here not shown) are fitting with coupling members of the stator teeth 30. Preferably, a sliding dovetail interface is used.

Thus, an interlocking of the stator back yoke to the stator teeth is achieved. Due to the fitting of the mating coupling members, a friction coupling is provided along the entire axial length after the sliding is completed to secure the stator back yoke 60 on the plurality of stator teeth 30. Such final state after the mechanical coupling of the stator back yoke 60 is shown in Fig. 2 (g). Guiding tools may be required to slide the stator back yoke 60 in a controlled manner.

Further, as shown in Fig. 2 (g), depending on the number wave winding coils 51 involved, the method may include leading out the connectors 55 and the respective second ends of the wave winding coils 51. The second ends may be connected to a corresponding neutral phase for star connection. However, as already pointed out above, the above number of wave winding coils 51 is only an example and various other wave winding coil arrangements 50 can be used.

The method may further include a step of cooling the stator back yoke 60 before mechanically coupling S300 a stator back yoke 60 with the plurality of stator teeth 30. This can be used for providing a greater clearance in the coupling interface, in particular dovetail interface, during assembly. In particular, when being in the final position, the process of thermal equilibration may lead to an additional arresting force of the stator back yoke 60 due to thermal expansion while in the coupled state on the stator teeth 30.

In summary, a stator 10 and a manufacturing process is provided that entirely prevents the buckling failure mechanism to occur since all stator teeth 30 are bond with the stator tube 20. The bonding can be obtained by overmoulding the stator teeth 30 in the process of forming the stator stube 20. Thus, stator tube wall thickness 26 of the stator tube 20 can be reduced and therefore the power density of optimized. In addition, since the stator back yoke 60 is coupled after the winding coil arrangement is completed, the wave winding coil arrangement 50 can be installed from the outside which eases the winding installation and enables automized/robotized installation.

### Reference signs

- 10: stator

- 20: stator tube
- 21: first side
- 22: second side
- 24: circumference
- 25: stator tube wall
- 26: stator tube wall thickness
- 27: conical tip portion

- 30: stator tooth
- 31: laterally extending foot portion
- 32: bottom portion
- 33: stator tooth width
- 34/35: side surface
- 36: front surface
- 37: stator slot
- 38: stator slot width

- 40: coating
- 41: coolant channel
- 42: coolant rib
- 43: coating width

- 50: winding coil arrangement
- 51: wave winding coil
- 52: winding layer
- 53: winding layer
- 54: winding layer

- 55: connector
- 58: outer diameter

- 60: stator back yoke

- 70: stator tube mold tool
- 72: stator tooth cavity
- 74: stator tube block

- 80: power electronics

- 100: electrical machine

- S100: forming stator tube
- S200: installing winding coil arrangement
- S300: mechanically coupling stator back yoke

- c: central axis
- C: axial direction

## Claims

1. A stator (10) for an electrical machine, comprising:
a stator tube (20) defining a central axis (c) and including a first side (21) and a second side (22) axially displaced from each other;
a plurality of stator teeth (30) along a circumference (24) of the stator tube (20), wherein
each of the stator teeth (30) extends from the first side (21) to the second side (22) of the stator tube (20) to define stator slots (37) between each neighboring stator teeth (30);
wherein at least a bottom portion (32) of each of the plurality of stator teeth (30) is embedded in a stator tube wall (25) of the stator tube (20) to bond the stator teeth (30) with the stator tube (20);
a winding coil arrangement (50) wound along the circumference (24) of the stator tube (20) and supported by the stator slots (37) formed between the stator teeth (30) of the stator tube (30); and
a stator back yoke (60) coupled with the stator teeth (30) to surround the stator tube (20) and to enclose the winding coil arrangement (50).

2. The stator (10) of claim 1, wherein each of the stator teeth (30) includes a laterally extending foot portion (31) at the bottom portion (32) of the stator teeth (30) axially extending from the first side (21) to the second side (22), wherein laterally extending foot portion (31) is embedded in the stator tube wall (25).

3. The stator (10) of one of the claims 1 and 2, wherein side surfaces (34, 35) of each of the stator teeth (30) include a coating (40) which is of a same stator tube material as the stator tube (20).

4. The stator (10) of claims 3, wherein the coating (40) on at least one of the side surfaces (34, 35) of the stator teeth (30) include at least one coolant channel (41) extending axially from the first side (21) to the second side (22).

5. The stator (10) of claim 4, wherein the at least one coolant channel (41) is formed in a corresponding coolant rib (42) which axially extends from the first side (21) to the second side.

6. The stator (10) of one of the claims 4 to 5, wherein the at least one coolant rib (42) and/or the at least one coolant channel (41) is formed at a height in the stator slot (37) corresponding to a height of a wave winding coil (51) among a plurality of wave winding coils (51) stacked on top of each other in the stator slot (37).

7. The stator (10) of one of the claims 3 to 6, wherein a stator tooth width (33) of the stator teeth (30) is constant and a coating width (43) of the coating (40) on the at least one side surface (34, 35) of the stator tooth (30) increases in a direction away from the central axis (c).

8. A method of manufacturing a stator (10) for an electrical machine (100), wherein the method comprises the steps of:
forming (S100) a stator tube (20) and bonding a plurality of stator teeth (30) with the stator tube (20) by overmolding the plurality of stator teeth (30) along a circumference (24) so that at least a bottom portion (32) of the plurality of stator teeth (30) is embedded in a stator tube wall (25) of the stator tube (20), wherein each of the stator teeth (30) extends from the first side (21) to the second side (22) of the stator tube (20) to define stator slots (37) between each neighboring stator teeth (30); and
installing (S200), from the outside, a winding coil arrangement (50) along the circumference (24) of the stator tube (20) and support the winding coil arrangement (50) by the stator slots (37) of the stator tube (20); and
mechanically coupling (S300) a stator back yoke (60) with the plurality of stator teeth (30) to surround the stator tube (20) and to enclose the winding coil arrangement (50).

9. The method of claim 8, wherein the method includes the steps of:
provide a stator tube mold tool (70) including a plurality of stator tooth cavities (72) formed at predefined positions along a circumference of the stator tube mold tool (70);
assemble a plurality of stator teeth (30) in the stator tooth cavities (72) of the stator tube mold tool (70);
insert a stator tube block (74) into a center of the stator tube mold tool (70); and
perform a step of injecting a stator tube material into the stator tube mold tool (70) to produce the stator tube (20) and to bond the plurality of stator teeth (30) with the stator tube (20).

10. The method of one of the claims 8 and 9, wherein the step of forming (S100) the stator tube (200) includes forming of a coating (40) on side surfaces (34, 35) of each of the stator teeth (30).

11. The method of one of the claims 10, the step of forming (S100) the stator tube (200) includes forming on at least one of the side surfaces (34, 35) of the stator teeth (30) at least one coolant channel (41) axially extending from the first side (21) to the second side (22).

12. The method of one of the claims 10 to 11, wherein a stator tooth width (33) of the stator teeth (30) is constant and the step of forming (S100) the stator tube (200) includes forming a coating width (43) of the coating (40) on the at least one side surface (34, 35) of the stator tooth (30) increasing in a direction away from the central axis (c).

13. The method of one of the claims 8 to 12, wherein the method includes a step of cooling the stator back yoke (60) before the step of mechanically coupling (S300) the stator back yoke (60) with the plurality of stator teeth (30).

14. An electrical machine (100), including a stator (10) according to one of the claims 1 to 7.

15. An aircraft comprising the electric machine (100) according to claim 14.
